# EUROPEAN PATENT APPLICATION

(11) **EP 1 510 407 A2**
(43) Date of publication of application: **02.03.2005**
(21) Application number: 04020603.9
(22) Date of filing: 31.08.2004
(51) Int. Cl.: B60R 11/02

(54) **Image displaying apparatus**

(30) Priority: 01.09.2003 JP 2003308836; 22.06.2004 JP 2004183880
(71) Applicant: MATSUSHITA ELECTRIC INDUSTRIAL CO., LTD., Kadoma-shi, Osaka 571-8501 (JP)
(72) Inventor: Hamada, Hiroyuki, Yokohama-shi KAnagawa-ken, 224-0065 (JP); Ibaraki, Susumu, Yokohama-shi Kanagawa-ken, 225-0002 (JP); Kuwabara, Takashi, Yokohama-shi Kanagawa-ken, 224-0054 (JP); Nagashima, Kazumasa, Yokohama-shi Kanagawa-ken, 224-0054 (JP); Itabashi, Toshiyuki, Yokohama-shi Kanagawa-ken, 227-0063 (JP); Iwasaki, Morio, Musashino-shi Tokyo-to, 180-0003 (JP); Kotani, Satoru, Yokohama-shi Kanagawa-ken, 241-0801 (JP)
(74) Representative: Balsters, Robert

(57) **Abstract**

Herein disclosed is an image displaying apparatus, comprising: a projector unit (22) mounted on an automotive vehicle (23) to project an image; a display screen (24, 81) mounted on the automotive vehicle (23) to display the image projected from the projector unit (22); an operation icon (25a to 25g) projected on one assigned area of the display screen by the projector unit (22); controlling means (26, 46, 91, 93) for controlling the projector unit (22) by producing an operation signal in correlation with the operation icon to the projector unit (22) when the operation icon (25a to 25g) is selected. The image displaying apparatus thus constructed can facilitate the operation of the projector with no need for such a special remote controlling unit and an operation panel.

## Description

### BACKGROUND OF THE INVENTION

### 1. Field of the Invention

The present invention relates to an image displaying apparatus, and more particularly to an image displaying apparatus to be mounted on an automotive vehicle to display an image on a screen from a projector.

### 2. Description of the Related Art

For an automotive vehicle developed in recent years, there have been provided a wide variety of image displaying apparatuses one typical example of which comprises a screen supported by a ceiling wall forming part of the automotive vehicle to display an image such as for example from television, hereinafter simply referred to as "TV", a video cassette recorder, a game machine and the like to enable family members, boyfriends and girlfriends to be provided with even more enjoyable drive.

As one of the conventional image displaying apparatus of this kind, there is proposed an image displaying apparatus to be mounted on the automotive vehicle as seen from a patent publication No. 162783/1995. The known image displaying apparatus comprises an overhead console formed on the ceiling wall of the automotive vehicle, a liquid crystal projector provided in one portion of the ceiling wall to be retractable into and expandable out of the overhead console, and a screen also provided in one portion of the ceiling wall in front of and in face-to-face relationship with the liquid crystal projector and out of a driver's visual range. The known image displaying apparatus thus constructed can allow the screen to display an image enlarged in size while the projector projecting the image, thereby making it possible for passengers sitting on the rear seat of the automotive vehicle to enjoy contents such as movies, television programs, and the like displayed on the screen. The known image displaying apparatus is usually used with a special remote control unit which can control the projector to have the image projected on the screen, and with an operation panel remote from the screen to the extent that the operator finds it difficult to operate the operation panel while watching the image on the screen.

The conventional image displaying apparatus, however, encounters such a problem that the special remote controlling unit and the operation panel are needed for controlling and operating the projector, resulting in the fact that the image displaying apparatus cannot be operated if the special remote controlling unit cannot be found, or otherwise the image displaying apparatus is difficult to be operated by the reason that the operation panel is spaced apart from the screen, thereby hindering the operator from operating the operation panel while watching the image on the screen.

### SUMMARY OF THE INVENTION

It is, therefore, an object of the present invention to provide an image displaying apparatus which can facilitate the operation of the projector with no need for such a special remote controlling unit and an operation panel.

It is another object of the present invention to provide an image displaying apparatus which can lessen the number of components constituting the image displaying apparatus.

It is a further object of the present invention to provide an image displaying apparatus which can be operated while an operator is watching the image on the screen.

According to the first aspect of the present invention, there is provided a image displaying apparatus, comprising: a projector unit mounted on an automotive vehicle to project an image; a display screen mounted on the automotive vehicle to display the image projected from the projector unit; an operation icon projected on one assigned area of the display screen by the projector unit; controlling means for controlling the projector unit by producing an operation signal in correlation with the operation icon to the projector unit when the operation icon is selected. The controlling means may include sensing unit for sensing on the display screen a light produced when the operation icon is selected to have the controlling means produce the operation signal in correlation with the operation icon. The display screen may be made of a flexible and transparent resin material. The sensing unit may include an optical sensor. The sensing unit may be constituted by a touch panel.

The image displaying apparatus may further comprise an additional controlling means disposed in overlapping relationship with the controlling means to control the projector unit by producing an additional operation signal when the operation icon is pushed deeply after being pushed shallowly. The image displaying apparatus may further comprise display screen transferring means for transferring the display screen forwardly and backwardly of the automotive vehicle.

The display screen may comprise a rim portion with at least one left, right, upper and lower end faces, and which further comprises a sensor unit formed on at least one of the left, right, upper and lower end faces of the rim portion for detecting the position on one of the left, right, upper and lower end faces to be in contact with the finger of an operator to produce an operation signal to the projector unit. The rim portion of the display screen may have a pair of left and right side end portions each in the form of a curved shape.

The image displaying apparatus may further comprise a finger position sensing unit for detecting a specific finger position occupied by a finger, and an eye sensing unit for detecting a specific eye position on the line linking the specific finger position and the operation icon to ensure that the operation icon is regarded as being selected to have the controlling means control the projector unit.

### BRIEF DESCRIPTION OF THE DRAWINGS

The features and advantages of an image displaying apparatus according to the present invention will be more clearly understood from the following description taken in conjunction with the accompanying drawings in which:
FIG. 1 is a schematic side view of an automotive vehicle equipped with the first embodiment of the image displaying apparatus according to the present invention;
FIG. 2 is a perspective view of the first embodiment of the image displaying apparatus according to the present invention and showing a display screen extended out of a ceiling wall forming part of the automotive vehicle;
FIG. 3 is a perspective view of the first embodiment of the image displaying apparatus according to the present invention and showing a display screen retracted into the ceiling wall forming part of the automotive vehicle;
FIG. 4 is a perspective view of the first embodiment of the image displaying apparatus according to the present invention and showing a display screen extended out of the ceiling wall of the automotive vehicle to have thereon a single operation icon represented by "MENU";
FIG. 5 is a perspective view of the first embodiment of the image displaying apparatus according to the present invention and showing a display screen extended out of the ceiling wall of the automotive vehicle to have thereon a plurality of operation icons represented by "TV", "DVD", "GAME", "-", "+", and "Enter";
FIG. 6 is a block diagram of controlling means forming part of the first embodiment of the image displaying apparatus according to the present invention;
FIG. 7 is a block diagram of controlling means forming part of the first embodiment of the image displaying apparatus according to the present invention;
FIG. 8 is a perspective view of the second embodiment of the image displaying apparatus according to the present invention and showing only controlling means and an additional controlling means forming part of the second embodiment of the image displaying apparatus;
FIG. 9 is a block diagram of the additional controlling means forming part of the second embodiment of the image displaying apparatus according to the present invention;
FIG. 10 is a perspective view of the third embodiment of the image displaying apparatus according to the present invention and showing a display screen extended out of the ceiling wall of the automotive vehicle;
FIG. 11 is a schematic side view of the third embodiment of the image displaying apparatus according to the present invention and showing a display screen and display screen transferring means for transferring the display screen;
FIG. 12 is a plan view of the fourth embodiment of the image displaying apparatus according to the present invention and showing a display screen having an image thereon;
FIG. 13 is a block diagram of a sensor unit forming part of the fourth embodiment of the image displaying apparatus according to the present invention;
FIG. 14 is a perspective view of the fifth embodiment of the image displaying apparatus according to the present invention and showing a display screen extended out of the ceiling wall of the automotive vehicle;
FIG. 15 is a block diagram of one of controlling means forming part of the fifth embodiment of the image displaying apparatus according to the present invention; and
FIG. 16 is a block diagram of remaining one of controlling means forming part of the fifth embodiment of the image displaying apparatus according to the present invention.

### DESCRIPTION OF THE PREFERRED EMBODIMENTS

### (First preferred embodiment)

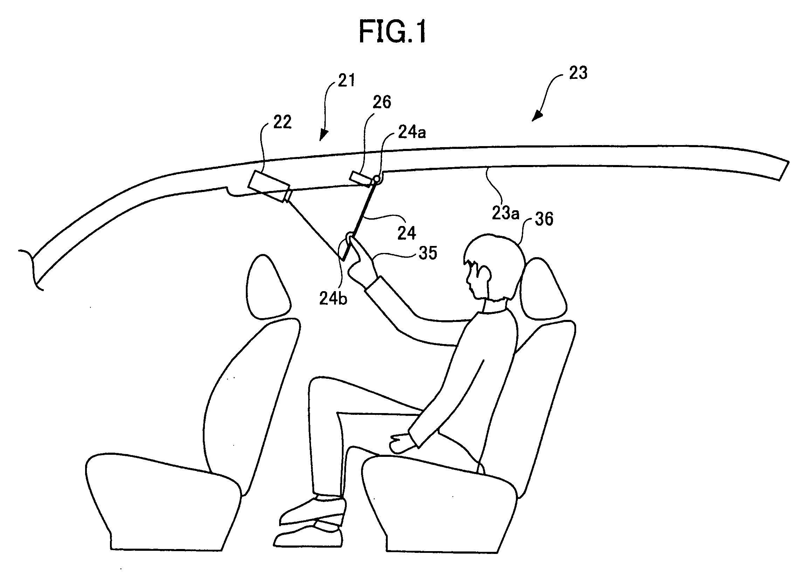

Referring now to FIGS. 1 to 7 of the drawings, there is shown the first preferred embodiment of the image displaying apparatus according to the present invention.

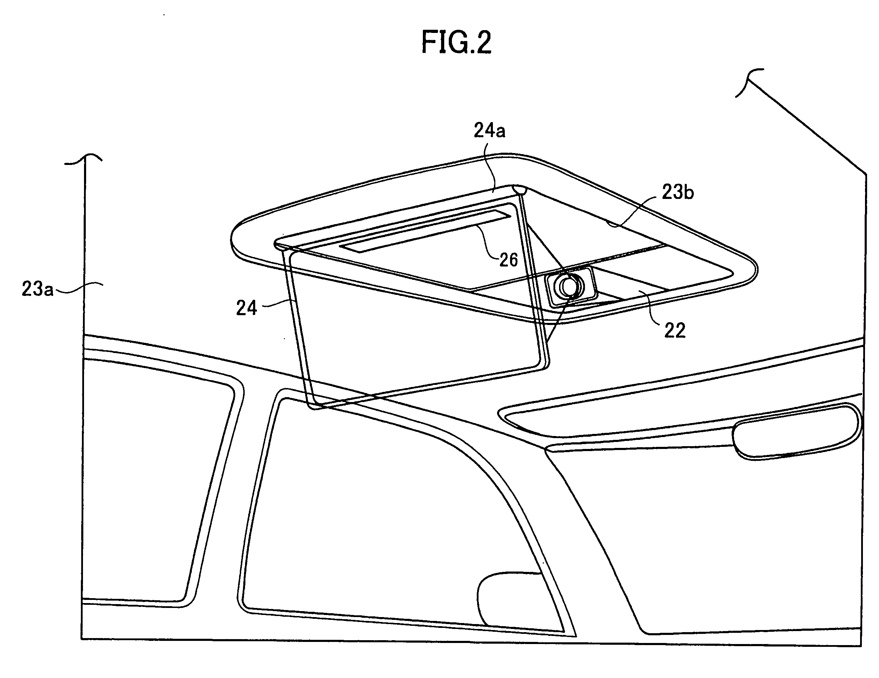

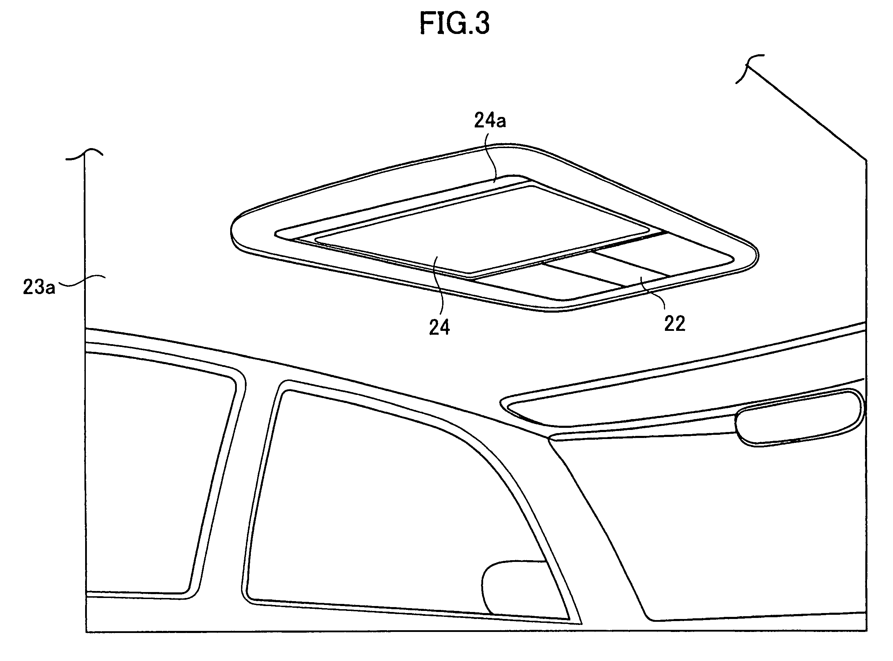

The image displaying apparatus is generally indicated at 21 in FIGS. 1 and 2 and comprises a projector unit 22, and a display screen 24. The projector unit 22 and the display screen 24 are mounted on a ceiling wall 23a forming part of an automotive vehicle 23 to ensure that the projector unit 22 projects an image on the display screen 24. The ceiling wall 23a is formed with a recess portion 23b to receive the display screen 24. The display screen 24 is made of a flexible and transparent resin material. The display screen 24 has a rockable shaft 24a rockably mounted on the ceiling wall 23a so that the display screen 24 is rockable with respect to the ceiling wall 23a around the rockable shaft 24a to assume two different positions consisting of a retracted position in which the display screen 24 is received in the recess portion 23b as shown in FIG. 3 and an extended position in which the display screen 24 is extended out of the recess portion 23b as shown in FIG. 2.

The display screen 24 is adapted to display an image projected from the projector unit 22 which comprises a picture signal processing circuit for processing a picture signal in a way of a gamma correcting, resolution correcting the picture signal outputted out of a TV tuner, a video cassette recorder, a DVD player, and a game machine, and a liquid crystal panel to display an image processed from the picture signal processed by the picture signal processing circuit. The projector unit 22 thus constructed can allow the liquid crystal panel to have the light modulated in light strength from the light source and then to project the image on the display screen 24 through a projector lens forming part of the projector in such a manner that the image is displayed on the surface of the display screen opposite to the surface of the display screen directed in face-to-face relationship with the projector unit 22 to have thereon the image projected from the projector unit 22. The fact that the image is displayed on the surface of the display screen opposite to the surface of the display screen directed in face-to-face relationship with the projector unit 22 to have thereon the image projected from the projector unit 22 results from the fact that the display screen 24 is made of a flexible and transparent resin material and thus allows the light to penetrate therethrough.

The projector unit 22 is constituted by a liquid crystal type of projector. In place of the liquid crystal type of projector, the projector unit 22 may be constituted by three-tube type of projector, i.e., cathode ray tube of projector, and a digital light processing projector according to the present invention. The projector unit 22 constituted by a liquid crystal type of projector can be used in combination with the display screen 24 which may be constituted by a light penetrating crystal liquid type of screen panel or by a light reflection crystal liquid type of screen panel. In short, the projector unit 22 is essential to enlarge the image on the display screen 24.

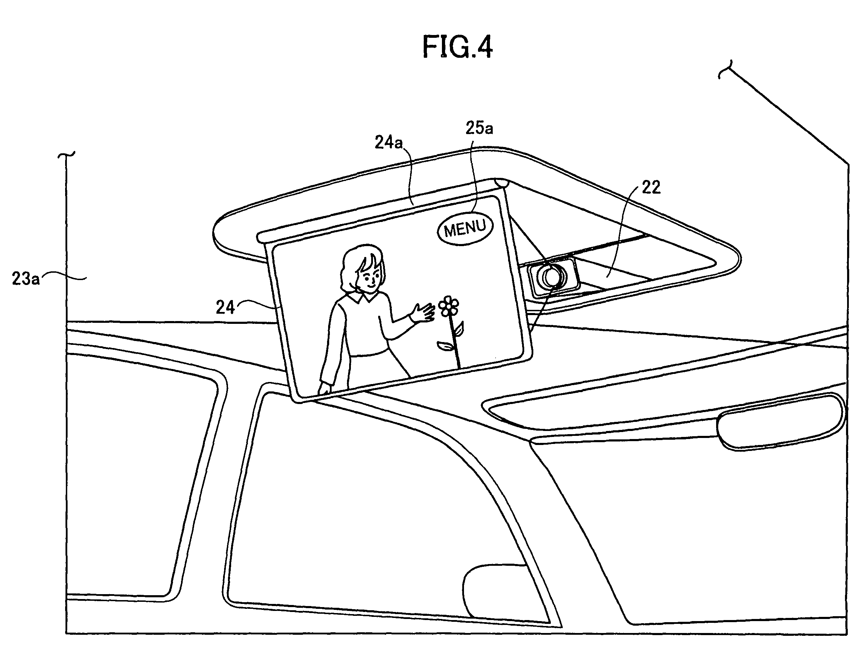

The image displaying apparatus further comprises an operation icon 25a which is best shown in FIG. 4 as being projected on one assigned area of the display screen 24 by the projector unit 22 to produce an operation signal related to the assigned area of the display screen 24. The operation signal is indicative of operating the projector unit 22.

The operation icon 25a is shown in FIG. 4 to be represented by the legend "MENU", and is designed to be capable of being pressurized and depressed into a recess by the operator's finger since the display screen is made of a flexible resin material.

The operation icon 25a can be displayed in a translucent state when the light is projected on the display screen 24 from the projector unit 22 to ensure that the operation icon 25a overlapped and displayed on the image projected on the display screen 24 by not means causes any hindrance to the image on the display screen 24. Or otherwise, the image projected and displayed in an embossed state on the display screen 24 can be protected from the operation icon 25a to ensure providing a clear image onto the display screen 24 even if the operation icon 25a is overlapped and displayed on the image projected on the display screen 24.

The image displaying apparatus further comprises controlling means 26 including a sensing unit 27, a recess position calculating unit 28, a memory 29, and a control signal outputting unit 30. The sensing unit 27 is of the reflection type and constituted by a light emitting element 27a for projecting a light, and a light receiving element 27b for receiving the light from the light emitting element 27a. The light emitting element 27a and the light receiving element 27b are securely mounted on the ceiling wall 23a of the automotive vehicle 23 in the vicinity of the display screen 24 and between the display screen 24 and the projector unit 22 in opposing and spaced relationship with the projector unit 22 so that the light emitting element 27a and the light receiving element 27b can detect the exact position, i.e., depressed portion 24b of the display screen 24 pushed, i.e., selected by the fmger 35 of the operator 36.

The recess position calculating unit 28, the memory 29, and the control signal outputting unit 30 will become apparent as the description proceeds.

Although the light emitting element 27a and the light receiving element 27b are mounted on the ceiling wall 23a of the automotive vehicle 23 in the vicinity of the display screen 24 and between the display screen 24 and the projector unit 22 in opposing and spaced relationship with the projector unit 22 in the above embodiment, the light emitting element 27a and the light receiving element 27b may be securely mounted on the ceiling wall 23a of the automotive vehicle 23 in the vicinity of the display screen 24 and backwardly of the display screen 24 to allow the light emitting element 27a and the light receiving element 27b to detect the exact position 24b of the display screen 24 pushed by the finger 35 of the operator 36 according to the present invention. The display screen 24 is made of a soft material in the above embodiment. According to the present invention, the display screen 24 may be made of a rigid material and thus capable of detecting the tip of the finger 35, i.e., the exact position of the display screen 24 pushed by the finger 35 of the operator 36 even if the light emitting element 27a and the light receiving element 27b are securely mounted on the ceiling wall 23a of the automotive vehicle 23 in the vicinity of the display screen 24 and backwardly of the display screen 24.

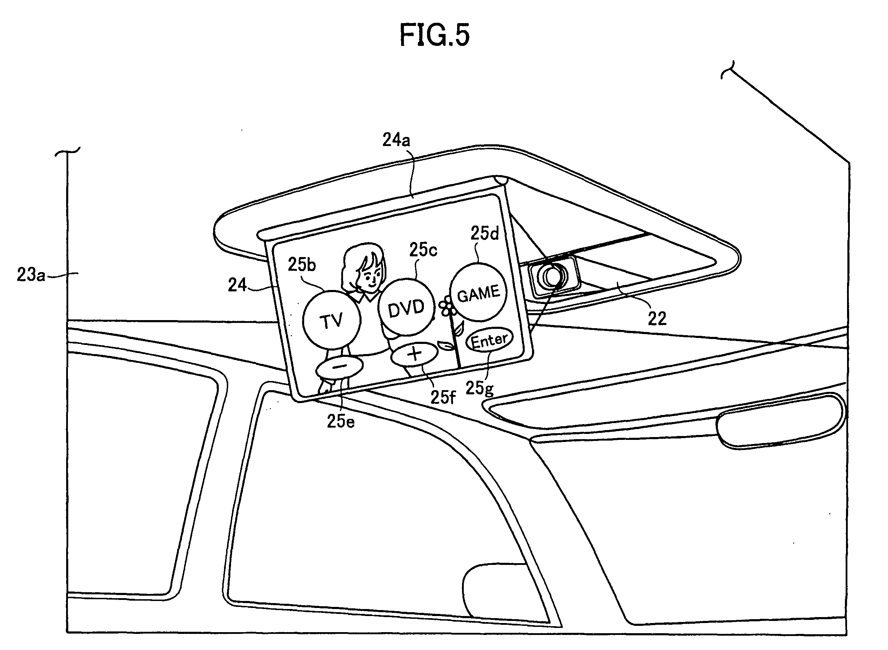

Although the image displaying apparatus comprises an operation icon 25a in the above embodiment, the image displaying apparatus may comprise a plurality of operation icons 25b to 25g according to the present invention as will be best shown in FIG. 5. In this case, each of the operation icons 25b to 25g is also projected on one assigned area of the display screen 24 by the projector unit 22 to produce the operation signal related to the assigned area of the display screen 24. The sensing unit 27 is designed to be capable of detecting six pieces of the operative information with the operations of the operation icons 25b to 25g.

The operation icons 25b to 25g are best shown in FIG. 5 to be represented by "TV", "DVD", "GAME", "-", "+", and "Enter", respectively, and are designed to be capable of being pressurized and depressed into respective recesses by the operator's finger since the display screen is made of a flexible resin and transparent material.

The operation icons 25b to 25g can be displayed in a translucent state when the light is projected on the display screen 24 from the projector unit 22 to ensure that the operation icons 25b to 25g overlapped and displayed on the image projected on the display screen 24 by not means causes any hindrance to the image on the display screen 24. Or otherwise, the image projected and displayed in an embossed state on the display screen 24 can be protected from the operation icons 25b to 25g to ensure providing a clear image onto the display screen 24 even if the operation icons 25b to 25g are overlapped and displayed on the image projected on the display screen 24.

The recesses produced by the operator's finger are detected by the sensing unit 27, i.e., the light emitting element 27a and the light receiving element 27b. This means that the image displaying apparatus can be operated in response to the operation icons 25b to 25g "TV", "DVD", "GAME", "-", "+", and "Enter" pushed by the fmger35 of the operator 36.

The light emitting element 27a is adapted to project the light while scanning the display screen 24 in the first direction, for example, horizontal direction and in the second direction perpendicular to the first direction. On the other hand, the light receiving element 27b is designed to receive the light projected on the display screen 24 from the light emitting element 27a after the light is reflected at a point on the display screen 24 pressurized and depressed by the finger 35 of the operator 36. The light receiving element 27b can detect the depressed portion on the display screen 24 by receiving the light reflected on the depressed portion on the display screen 24.

The memory 29 is adapted to store information about the position on the display screen 24 in correlation with the brightness level of the light projected and reflected on the display screen 24 by the light emitting element 27a. This means that the memory 29 serves to store information about the brightness levels of the light on the display screen 24 different from one another in correlation with the respective different positions on the display screen 24. The information stored in the memory 29 further includes the positions on the display screen 24 in correlation with the operation icon 25a represented by "MENU", and the positions on the display screen 24 in correlation with the operation icons 25b to 25g represented by "TV", "DVD", "GAME", "-", "+", and "Enter", respectively.

The recess position calculating unit 28 is adapted to convert the light received by the light receiving element 27b to a digital signal indicative of the brightness level of the light and then to compare the digital signal of the brightness level with the digital signal in the digital data of the position on the display screen 24 preliminarily stored in the memory 29 so that the recess position calculating unit 28 can locate the position depressed by the finger 35 of the operator 36 with the brightness level of the light detected by the light receiving element 27b. It will thus be understood that the difference between the brightness level of the light reflected by the previously mentioned position and received by the light receiving element 27b and the brightness level of the light predicted by the digital data preliminarily stored in memory can locate the different position depressed by the finger 35 of the operator 36.

The operation signal outputting unit 30 is designed to produce operation signals in correlation with the respective positions of the operation icons 25a to 25g calculated by the recess position calculating unit 28 and to transmit the operation signals to a TV tuner, a video cassette recorder, a DVD player, and other game machines by a wireless or wired control system.

From the foregoing description, it will be understood that the previously mentioned light emitting element 27a and the light receiving element 27b collectively constitute a sensing unit 27 for sensing on the display screen a light produced when the operation icons pushed, and that the sensing unit 27, the recess position calculating unit 28, the memory 29 and the operation signal outputting unit 30 collectively constitute the controlling means 26 for controlling the projector unit 22 by producing the operation signal in correlation with the operation icon to the projector unit 22 when the operation icon is pushed, i.e., selected by the operator 36.

The operation of the image displaying apparatus will hereinafter be described in detail.

In FIG. 4, the projector unit 22 is firstly operated to have the image and the operation icon 25a projected on the display screen 24. The image includes TV, video, DVD, and game images from the TV tuner, the video cassette recorder, the DVD player and the game machine. The operation icon 25a projected on the display screen 24, i.e., the assigned area of the display screen 24 is indicated by the legend "MENU".

In FIG. 5, the projector unit 22 is firstly operated to have the image and the operation icons 25b to 25g projected on the display screen 24. The image also includes TV, video, DVD, and game images from the TV tuner, the video cassette recorder, the DVD player, and the game machine. The operation icons 25b to 25g projected on the display screen 24, i.e., the assigned areas of the display screen 24 are indicated by the legends "TV", "DVD", "GAME", "-", "+" and "Enter".

When the operator 36 pushes the operation icon 25a "MENU" on the display screen 24, the portion of the display screen 24 is depressed into the recess in correlation with the operation icon 25a "MENU". This means that the portion of the display screen 24 opposite to the portion of the display screen 24 depressed into the recess in correlation with the operation icon 25a "MENU" is protruded outwardly of the opposite surface of the display screen 24. When the light is projected on the opposite surface of the display screen 24 from the light emitting element 27a, the light is reflected by the opposite surface of the display screen 24 and then received by the light receiving element 27b in the form of brightness level.

The light received by the light receiving element 27b is transformed into a digital signal indicative of the brightness level of the light by the recess position calculating unit 28. The digital signal of the brightness level is then compared with the brightness level in correlation with the position on the display screen 24 in the digital data preliminarily stored in memory 29 by the recess position calculating unit 28 so that the recess position calculating unit 28 can locate the position depressed by the finger 35 of the operator 36 with the brightness level detected by the light receiving element 27b to transmit the positional information in correlation with the position of the operation icon 25a to the operation signal outputting unit 30. When the operation signal outputting unit 30 receives the positional information transmitted by the recess position calculating unit 28, the operation signal outputting unit 30 produces an operation signal to operate the projector unit 22. When the projector unit 22 receives the operation signal from the operation signal outputting unit 30, the projector unit 22 is operated to have the image and the operation icon 25a "MENU" on the display screen 24 as best shown in FIG. 4 changed to the image and the operation icons 25b to 25g on the display screen 24 as best shown in FIG. 5.

When the operator 36 pushes the operation icon 25b "TV" on the display screen 24, the portion of the display screen 24 is depressed into the recess in correlation with the operation icon 25b "TV". This means that the portion of the display screen 24 opposite to the portion of the display screen 24 depressed into the recess in correlation with the operation icon 25b "TV" is projected outwardly of the opposite surface of the display screen 24. When the light is projected on the opposite surface of the display screen 24 from the light emitting element 27a, the light is reflected by the opposite surface of the display screen 24 and then received by the light receiving element 27b in the form of brightness level.

The light received by the light receiving element 27b is transformed into a digital signal indicative of the brightness level of the light by the recess position calculating unit 28. The digital signal of the brightness level is then compared with the brightness level in correlation with the position on the display screen 24 in the digital data preliminarily stored in memory 29 by the recess position calculating unit 28 so that the recess position calculating unit 28 can locate the position depressed by the finger 35 of the operator 36 with the brightness level detected by the light receiving element 27b to transmit the positional information to the operation signal outputting unit 30.

When the operator 36 pushes the operation icon 25g "Enter" on the display screen 24, the portion of the display screen 24 is depressed into the recess in correlation with the operation icon 25g "Enter". This means that the portion of the display screen 24 opposite to the portion of the display screen 24 depressed into the recess in correlation with the operation icon 25g "Enter" is projected outwardly of the opposite surface of the display screen 24. When the light is projected on the opposite surface of the display screen 24 from the light emitting element 27a, the light is reflected by the opposite surface of the display screen 24 and then received by the light receiving element 27b in the form of brightness level.

The light received by the light receiving element 27b is transformed into a digital signal indicative of the brightness level of the light by the recess position calculating unit 28. The digital signal of the brightness level is then compared with the brightness level in correlation with the position on the display screen 24 in the digital data preliminarily stored in memory 29 by the recess position calculating unit 28 so that the recess position calculating unit 28 can locate the position depressed by the finger 35 of the operator 36 with the brightness level detected by the light receiving element 27b to transmit the positional information to the operation signal outputting unit 30.

When the operation signal outputting unit 30 receives the positional information transmitted by the recess position calculating unit 28, the operation signal outputting unit 30 produces the operation signal related to the assigned area of the display screen 24 or the assigned areas of the display screen 24 to output the operation signal to the projector unit 22. When the projector unit 22 receives the operation signal from the operation signal outputting unit 30, the projector unit 22 is operated to have the image and the operation icons 25b to 25g on the display screen 24 changed to the image of TV tuner on the display screen 24.

In the same manner as described in the above, when the operator 36 pushes the operation icon 25c "DVD" or 25d "GAME" on the display screen 24, the portion of the display screen 24 is depressed into the recess in correlation with the operation icon 25c "DVD" or 25d "GAME". This means that the portion of the display screen 24 opposite to the portion of the display screen 24 depressed into the recess in correlation with the operation icon 25c "DVD" or 25d "GAME" is projected outwardly of the opposite surface of the display screen 24. When the light is projected on the opposite surface of the display screen 24 from the light emitting element 27a, the light is reflected by the opposite surface of the display screen 24 and then received by the light receiving element 27b in the form of brightness level.

The light received by the light receiving element 27b is transformed into a digital signal indicative of the brightness level of the light by the recess position calculating unit 28. The digital signal of the brightness level is then compared with the brightness level in correlation with the position on the display screen 24 in the digital data preliminarily stored in memory 29 by the recess position calculating unit 28 so that the recess position calculating unit 28 can locate the position depressed by the finger 35 of the operator 36 with the brightness level detected by the light receiving element 27b to transmit the positional information to the operation signal outputting unit 30.

When the operator 36 pushes the operation icon 25g "Enter" on the display screen 24, the portion of the display screen 24 is depressed into the recess in correlation with the operation icon 25g "Enter". This means that the portion of the display screen 24 opposite to the portion of the display screen 24 depressed into the recess in correlation with the operation icon 25g "Enter" is projected outwardly of the opposite surface of the display screen 24. When the light is projected on the opposite surface of the display screen 24 from the light emitting element 27a, the light is reflected by the opposite surface of the display screen 24 and then received by the light receiving element 27b in the form of brightness level.

The light received by the light receiving element 27b is transformed into a digital signal indicative of the brightness level of the light by the recess position calculating unit 28. The digital signal of the brightness level is then compared with the brightness level in correlation with the position on the display screen 24 in the digital data preliminarily stored in memory 29 by the recess position calculating unit 28 so that the recess position calculating unit 28 can locate the position depressed by the finger 35 of the operator 36 with the brightness level detected by the light receiving element 27b to transmit an operation signal to the operation signal outputting unit 30.

When the operation signal outputting unit 30 receives the operation signal transmitted by the recess position calculating unit 28, the operation signal outputting unit 30 produces the operation signal to the projector unit 22. When the projector unit 22 receives the operation signal from the operation signal outputting unit 30, the projector unit 22 is operated to have the image and the operation icons 25b to 25g on the display screen 24 changed to the image of the DVD player or the game machine.

From the foregoing description, it will be understood that the operation icon of the image displaying apparatus is projected on one assigned area of the display screen 24 by the projector unit 22 to produce the operation signal or the operation signals to operate the projector unit 22 when the operation icon 25a of the assigned areas of the display screen 24 or the operation icons 25b to 25g of the assigned areas of the display screen 24 are pushed by the finger 35 of the operator 36 to depress the position of the operation icon 25a or the positions of the operation icons 25b to 25g, thereby making it possible to have the sensing unit 27 to detect the positional information in correlation with the depressed position of the operation icon 25a or the positions of the operation icons 25b to 25g to ensure outputting the operation signal or the operation signals in response to the operation icon 25a or the operation icons 25b to 25g pushed. This means that the image displaying apparatus can facilitate the operation of the projector unit 22 with no need to use a special remote controlling unit, resulting from the fact that the operation icon 25a or the operation icons 25b to 25g on the display screen 24 are pushed to make the operation signal or the operation signals needed by the special remote controlling unit in the conventional image displaying apparatus. Accordingly, the image displaying apparatus can lessen the number of components constituting the image displaying apparatus. Further, the image displaying apparatus can be operated by the operator while the operator is watching the image on the display screen 24.

The fact that the operating information detecting means 26 including the light emitting element 27a and light receiving element 27b are securely mounted on the ceiling wall 23a of the automotive vehicle 23 between the display screen 24 and the projector unit 22 in opposing and spaced relationship with the projector unit 22 leads to the fact that the operator can watch the image on the display screen 24 without the operating information detecting means 26 hampering the operator 36 from watching the image on the display screen 24. The position of the operating information detecting means 26 provided between the display screen 24 and the projector unit 22 can prevent the operating information detecting means 26 from being operated by the finger 35 of the operator 36 even if the finger 35 of the operator 36 is on the display screen 24 without being pushed on the operation icon 25a or the operation icons 25b to 25g.

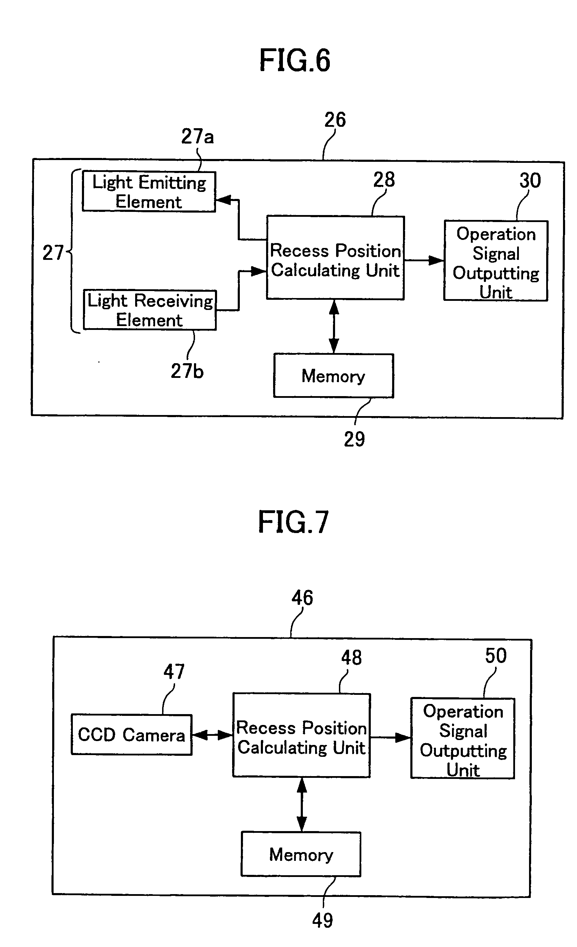

While there has been described in the above about the first embodiment of the image displaying apparatus comprising controlling means 26 including the sensing unit 27, i.e., the light emitting element 27a and the light receiving element 27b each constituted by an optical sensor, the controlling means 26 may be replaced by controlling means 46 constituted by the charge-coupled device camera 47 best shown in FIG. 7. The charge-coupled device camera will be hereinafter referred to as "CCD camera".

The controlling means 46 is shown in FIG. 7 to comprise a CCD camera 47, a recess position calculating unit 48, a memory 49, and an operation signal outputting unit 50. The CCD camera 47 is designed to take an image on the entire area of the display screen 24 and to optically convert the image taken into a digital signal to be outputted to the recess position calculating unit 48.

The memory 49 is adapted to store information about the position on the display screen 24 in correlation with the brightness level of the light projected and reflected on the display screen 24 by the light emitting element 27a. This means that the memory 49 serves to store information about the different brightness levels of the light on the display screen 24 different from one another in correlation with the respective different positions on the display screen 24. The information stored in the memory further includes the position of the display screen 24 in correlation with the operation icons 25b to 25g represented by "TV", "DVD", "GAME", "-", "+", and ''Enter'', respectively.

The recess position calculating unit 48 is adapted to convert the light signal inputted from the CCD camera 47 to a digital signal indicative of the brightness level of the light and then to compare the digital signal with the digital data of the position on the display screen 24 preliminarily stored in memory 49 so that the recess position calculating unit 48 can locate the position depressed by the finger 35 of the operator 36 with the brightness level detected by the CCD camera 47. It will thus be understood that the different brightness level of the light reflected by the previously mentioned position and received by the CCD camera 47 can locate the different position depressed by the finger 35 of the operator 36.

The operation signal outputting unit 50 is designed to produce operation signals in correlation with the respective positions of the operation icons 25a to 25g calculated by the recess position calculating unit 48 and to transmit the operation signals to a TV tuner, a video cassette recorder, a DVD player, and other game machines by a wireless or wired control system.

In the image displaying apparatus previously mentioned, the sensing unit 27 may be constituted by a touch panel to ensure that the position touched by the finger 35 of the operator 36 is detected by the touch panel with no mistake in the operation of the sensing unit 27.

While there has been described in the forgoing embodiment about the fact that the sensing unit 27 adapted to detect the exact position, i.e., depressed portion 24b of the display screen 24 pushed by the finger 35 of the operator 36, the sensing unit may detect whether or not the operation icon is selected by the operator.

### (Second preferred embodiment)

Although there has been described in the above about the first preferred embodiment of the image displaying apparatus according to the present invention, the first embodiment may be replaced by the second to fifth preferred embodiments of the image displaying apparatus according to the present invention in order to attain the objects of the present invention. The second to fifth embodiments of the image displaying apparatus will be described hereinafter.

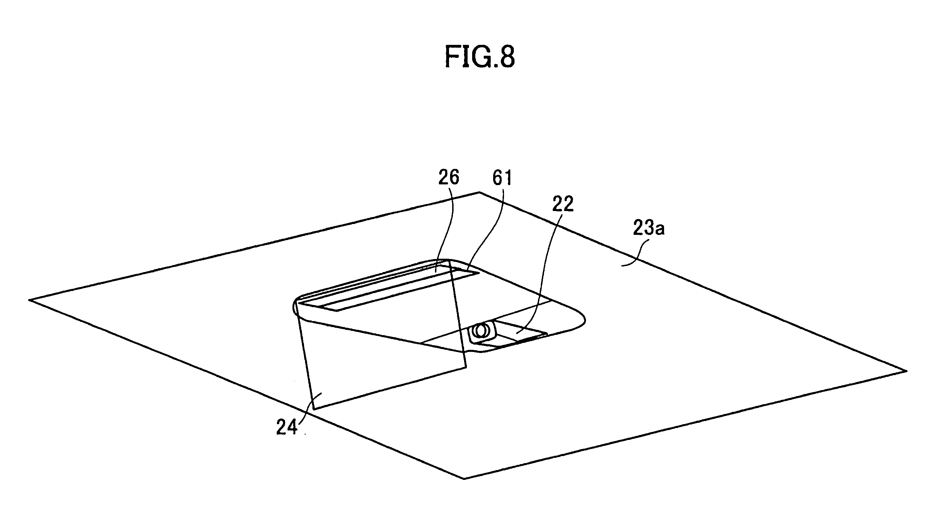

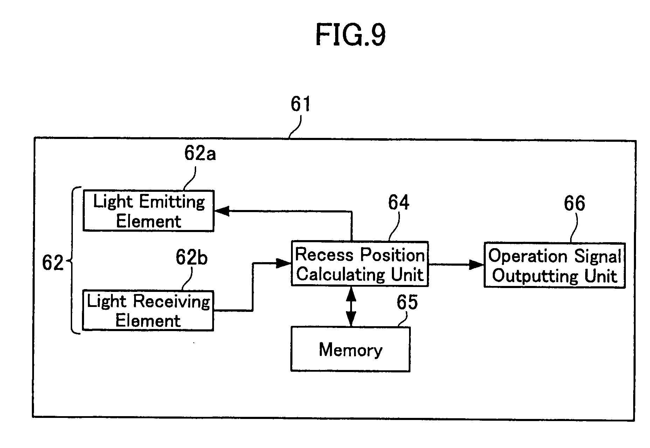

Referring now to FIGS. 6, 8 and 9 of the drawings, there is shown a second preferred embodiment of the image displaying apparatus.

The constitutional elements and the steps of the second preferred embodiment of the image displaying apparatus according to the present invention as shown in FIGS 6, 8 and 9 are entirely the same as those of the first preferred embodiment of the image displaying apparatus according to the present invention as shown in FIGS. 1 to 7 except for the constitutional elements and the steps appearing in the following description. Therefore, only the constitutional elements and the steps of the second preferred embodiment of the image displaying apparatus different from those of the first preferred embodiment of the image displaying apparatus will be described in detail hereinafter. The constitutional elements and the steps of the second preferred embodiment of the image displaying apparatus entirely the same as those of the first preferred embodiment of the image displaying apparatus will not be described but bear the same reference numerals and legends as those of the first preferred embodiment of the image displaying apparatus in FIGS. 1 to 7 to avoid tedious repetition.

The following description will be directed to the constitutional elements and the steps of the second preferred embodiment of the image displaying apparatus different from those of the first preferred embodiment of the image displaying apparatus.

The second embodiment of the image displaying apparatus comprises additional controlling means 61 including a sensing unit 62 constituted by an optical sensor, a recess position calculating unit 64, a memory 65, and a control signal outputting unit 66. The controlling means 61 is disposed in overlapping relationship with the controlling means 26 to produce an additional operation signal to control the projector unit when the operation icon is pushed deeply after being pushed shallowly.

The sensing unit 62 is of the reflection type and constituted by a light emitting element 62a for projecting a light and a light receiving element 62b for receiving the light from the light emitting element 62a. The light emitting element 62a and the light receiving element 62b are securely mounted on the ceiling wall 23a of the automotive vehicle 23 in the vicinity of the display screen 24 and between the display screen 24 and the projector unit 22 in opposing and spaced relationship with the projector unit 22 so that the light emitting element 62a and the light receiving element 62b can detect the exact position, i.e., depressed portion 24b of the display screen 24 pushed by the finger 35 of the operator 36. The recess position calculating unit 64, the memory 65, and the operation signal outputting unit 66 will become apparent as the description proceeds. The depressed portion 24b of the display screen 24 pushed by the finger 35 of the operator 36 in the second embodiment of the image displaying apparatus is the same as the depressed portion 24b of the display screen 24 pushed by the finger 35 of the operator 36 formed in the first embodiment of the image displaying apparatus but the depressed portion 24b of the display screen 24 pushed by the finger 35 of the operator 36 in the second embodiment of the image displaying apparatus has a depth deeper than that of the depressed portion 24b of the display screen 24 pushed by the finger 35 of the operator 36 in the first embodiment of the image displaying apparatus. This means that the depressed portion 24b in the second embodiment of the image displaying apparatus is deep, while the depressed portion 24b in the first embodiment of the image displaying apparatus is shallow. The deep depressed portion 24b in the second embodiment of the image displaying apparatus is detected by the sensing unit 62 of the controlling means 61, while the shallow depressed portion 24b in the first embodiment of the image displaying apparatus is detected by the sensing unit 27 of the controlling means 26.

The light emitting element 62a and the light receiving element 62b are securely mounted on the ceiling wall 23a of the automotive vehicle 23 in the vicinity of the light emitting element 27a and the light receiving element 27b of the first embodiment and the display screen 24 and between the display screen 24 and the projector unit 22 in opposing and spaced relationship with the projector unit 22 with the light emitting element 62a and the light receiving element 62b being remote from the display screen 24 while the light emitting element 27a and the light receiving element 27b being close to the display screen 24. The light emitting element 62a and the light receiving element 62b are held in contact with the light emitting element 27a and the light receiving element 27b in a direction perpendicular to the outer surface of the displaying screen 24 when the displaying screen 24 assumes the extended position as shown in FIG. 2.

The memory 65 is adapted to store information about the position on the display screen 24 in correlation with the brightness level of the light projected and reflected on the display screen 24 by the light emitting element 62a. This means that the memory 65 serves to store information about the different brightness levels of the light on the display screen 24 different from one another in correlation with the respective different positions on the display screen 24. The information stored in the memory further includes the position of the display screen 24 in correlation with the operation icon 25a represented by the legend "MENU" or the operation icons 25b to 25g represented by the legends "TV", "DVD", "GAME", "-", "+", and "Enter", respectively.

The recess position calculating unit 64 is adapted to convert the light received by the light receiving element 62b to a digital signal indicative of the brightness level of the light and then to compare the digital signal of the brightness level with the digital signal in the digital data stored in memory 65 so that the recess position calculating unit 64 can locate the position depressed by the finger 35 of the operator 36 with the brightness level of the light detected by the light receiving element 62b. It will thus be understood that the different brightness level of the light reflected by the previously mentioned position and received by the light receiving element 62b can locate the different position depressed by the finger 35 of the operator 36 in the manner similar to the first embodiment of the image displaying apparatus.

The operation signal outputting unit 66 is designed to produce operation signals in correlation with the respective positions of the operation icons 25a to 25g calculated by the recess position calculating unit 64 and to transmit the operation signals to a TV tuner, a video cassette recorder, a DVD player, and other game machines by a wireless or wired control system.

From the foregoing description, it will be understood that the previously mentioned light emitting element 62a and the light receiving element 62b collectively constitute the sensing unit 62 for detecting the operative information with the operation of the operation icon; and with the operations of the operation icons, and that the previously mentioned recess position calculating unit 64, the memory 65 and the operation signal outputting unit 66 collectively the additional controlling means 61 for controlling the projector unit based on the operation signals outputted by the signal outputting means.

In FIG. 6, the operation signal outputting unit 30 is designed to produce operation signals in correlation with the respective positions of the operation icons 25a to 25g calculated by the recess position calculating unit 28 and to transmit the operation signals to the projector unit 26 by a wireless or wired control system. The operation signals thus produced by the operation signal outputting unit 30 is designed to have the operation icons 25a to 25g assume respective different progressed states indicated on the display screen 24 by respective different icon symbols.

In the second embodiment of the image displaying apparatus, the light emitting element 62a and the light receiving element 62b collectively serve as an auxiliary sensing unit 62 with respect to the sensing unit 27 forming part of the first embodiment of the image displaying apparatus. The previously mentioned recess position calculating unit 64, the memory 65 and the operation signal outputting unit 66 collectively constitute projector unit controlling means for controlling the projector unit based on the operation signals outputted by the signal outputting means.

The operation of the second embodiment of the image displaying apparatus will hereinafter be described in detail.

The operation of the second preferred embodiment of the image displaying apparatus according to the present invention are entirely the same as that of the first preferred embodiment of the image displaying apparatus according to the present invention except for the operation appearing in the following description. Therefore, only the operation of the second preferred embodiment of the image displaying apparatus different from that of the first preferred embodiment of the image displaying apparatus will be described in detail hereinafter.

The operation icon "MENU" is firstly pushed by the operator 36. One of the operation icons "TV", "DVD", and "GAME" is then touched by the operator 36. At this time, the sensing unit 27 is operated to detect the position in correlation with one of the operation icons "TV", "DVD", and "GAME" to ensure that the operation signal outputting unit is operated to produce the operation signals to have the operation icons 25b to 25g "TV", "DVD", and "GAME" assume the respective progressed states indicated on the display screen 24 by the respective icon symbols different from the operation icons 25b to 25g "TV", "DVD", and "GAME". For example, in the case that the sensing unit 27 is operated to detect the position in correlation with the operation icon "TV", the operation signal outputting unit is operated to produce the operation signal to have the operation icon 25b "TV" assume the progressed state indicated on the display screen 24 by the icon symbol different from the operation icon 25b "TV".

In stead of the previously mentioned process, the operation icon "MENU" may be firstly pushed by the operator 36 in a similar manner with the above before the finger 35 of the operator 36 slides on the display screen 24 to the operator's target operation icon selected from among the operation icons 25b to 25g "TV", "DVD", and "GAME". At this time, the sensing unit 27 is also operated to detect the position in correlation with one of the operation icons "TV", "DVD", and "GAME" to ensure that the operation signal outputting unit is operated to produce the operation signals to have the operation icons 25b to 25g "TV", "DVD", and "GAME" assume the respective progressed states indicated on the display screen 24 by the respective icon symbols different from the operation icons 25b to 25g "TV", "DVD", and "GAME". With the finger 35 of the operator 36 sliding on the display screen 24 to the operator's target operation icon for example the operation icon, the operation icon 25c "DVD" assumes the progressed state indicated on the display screen 24 by the icon symbol different from the operation icon 25c "DVD".

The following explanation will be directed to the example taking the operation icon in place of the operation icon 25b "TV".

The operation icon 25c "DVD" is strongly pushed by the finger 35 of the operator 36, with the result that the optical senor of the sensing unit 62 is operated to detect the brightness level changed with the operation icon 25c "DVD" strongly pushed by the finger 35 of the operator 36. At this time, the recess position calculating unit 64 is operated to calculate the position in correlation with the operation icon 25c "DVD" strongly pushed by the finger 35 of the operator 36.

The operation signal outputting unit 66 is then operated to produce an operation signal in correlation to the operation icon 25c "DVD" to output to the projector unit 22 the operation signal of having the "DVD" player to reproduce. The projector unit 22 is then operated by the operation signal to project on the display screen 24 the image reproduced by the "DVD" player.

From the second embodiment of the image displaying apparatus according to the present invention constructed as in the above to have the light emitting element 62a and the light receiving element 62b securely mounted on the ceiling wall 23a of the automotive vehicle 23 in the vicinity of the display screen 24 and between the display screen 24 and the projector unit 22 in opposing and spaced relationship with the projector unit 22, it will be understood that the operation icon can be operated to be pressurized with two different pressures consisting of the first pressure at which the operation icon is pushed and a second pressure at which the operation icon is repeatedly pushed to produce first and second pressure operative information to ensure that the operation signals outputted from the controlling means 61 to the projector unit 22, viz., the first and second pressure operative information is produced by the operation icon pushed at different pressures.

The operation icons 25a to 25g can be operated by the sliding operation on the display screen 24 by the finger of the operator while being pushed by the finger of the operator 36, with the result that the operator's target operation icon can assume the progressed state indicated on the display screen by the icon symbol different from the operation icon.

According to the present invention, the operation icon on the display screen can be replaced by a different colored icon, a different shaped icon, a different size icon, an operation icon displayed in combination with the different image on the display screen, and other means which can be easily distinguished from the operation icon described in the above. In this case, the operation icon is required to be pushed strongly, thereby making it possible to start the operations.

### (Third preferred embodiment)

The third embodiment of the image displaying apparatus will be described hereinafter.

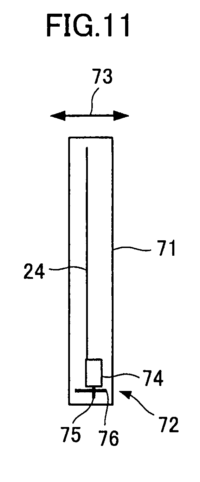

Referring now to FIGS. 6, 9 to 11 of the drawings, there is shown a third preferred embodiment of the image displaying apparatus.

The constitutional elements and the steps of the third preferred embodiment of the image displaying apparatus according to the present invention as shown in FIGS. 6, 9 to 11 are entirely the same as those of the first preferred embodiment of the image displaying apparatus according to the present invention as shown in FIGS. 1 to 7 except for the constitutional elements and the steps appearing in the following description. Therefore, only the constitutional elements and the steps of the third preferred embodiment of the image displaying apparatus different from those of the first preferred embodiment of the image displaying apparatus will be described in detail hereinafter. The constitutional elements and the steps of the third preferred embodiment of the image displaying apparatus entirely the same as those of the first preferred embodiment of the image displaying apparatus will not be described but bear the same reference numerals and legends as those of the first preferred embodiment of the image displaying apparatus in FIGS. 1 to 7 to avoid tedious repetition.

The following description will be directed to the constitutional elements and the steps of the third preferred embodiment of the image displaying apparatus different from those of the first preferred embodiment of the image displaying apparatus.

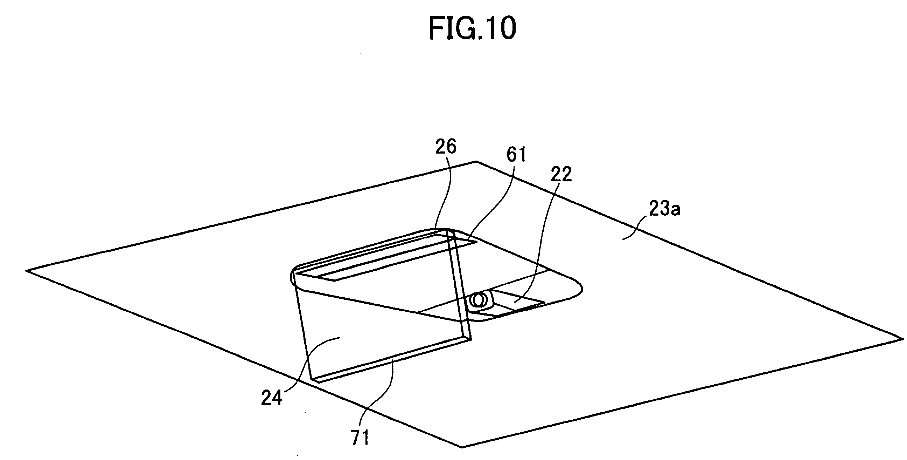

The image displaying apparatus is shown in FIG. 10 to comprise a holder 71 swingably supported by the ceiling wall 23a, and a display screen 24 received in the holder 71 to move toward and away from the operator 36 when the holder 71 is held at a position expanded from the home position of the holder 71. The display screen 24 has an outer rim and a portion surrounded by the outer rim to be exposed. The image displaying apparatus further comprises display screen transferring means 72 for transferring the display screen forwardly and backwardly of the automotive vehicle in a direction shown by an arrow 73. The display screen transferring means 72 is constituted by an electric motor 74 provided below the display screen 24, a gear 75 drivably connected with the electric motor 74, and a rack 76 housed in the holder 71 and in meshing engagement with the gear 74 and securely connected with the display screen 24 to transfer the display screen 24 forwardly and backwardly. The display screen transferring means 72 is designed to be operated by the controlling means 26 and the controlling means 61 to transfer the display screen 24 forwardly and backwardly.

The operation of the third embodiment of the image displaying apparatus will hereinafter be described in detail.

The operation method of operating the display screen of the third preferred embodiment of the image displaying apparatus according to the present will be described hereinafter.

The operation icon "MENU" is firstly pushed by the operator 36. The operator 36 softly touches some position on the display screen 24, while he or she is considering which operation icons should be pushed.

At the time of the soft touch by the operator 36, the recess position calculating unit 28 of the controlling means 26 is operated to calculate the position pushed by the operator 36. If the position pushed by the operator 36 is not within the area occupied by any one of the operation icons 25b to 25g at the time of the soft touch by the operator 36, the operation signal outputting unit 30 is operated to produce the operation signal to have the display screen transferring means 72 operated to transfer the display screen 24 backwardly or to retain the display screen 24 at a standstill.

The operator 36 then laterally slides his or her ringer 35 on the display screen 24 while softly touching the display screen 24 until the finger 35 reaches a position within the area occupied by any one of the operation icons 25b to 25g, for example, the operation icon 25c "DVD". At the time of the finger 35 reaching the area, the recess position calculating unit 28 of the controlling means 26 is operated to calculate the position reached by the finger 35. If the position reached by the finger 35 is within the area occupied by any one of the operation icons 25b to 25g, for example, the operation icon 25c "DVD", the operation signal outputting unit 30 is operated to produce two operative information signals consisting of a first operative information signal to be outputted to the display screen transferring means 72 to ensure that the display screen 24 is transferred forwardly by the display screen transferring means 72, and a second operative information signal to be outputted to the projector unit 22 to ensure that the operation icon 25c "DVD" is changed into an operation icon displayed in combination with the different image on the display screen 24.

After the operator 36 laterally slides his or her finger 35 on the display screen 24 while softly touching the display screen 24 in the manner previously mentioned, the operator 36 pushes the display screen 24 to the degree that the depressed portion of the display screen 24 pushed by the operator 36 can be detected by the sensing unit 62. At this time, the recess position calculating unit 64 of the controlling means 61 is operated to calculate the depressed position of the display screen 24.

The position signal outputting unit 66 is then operated to output to the projector unit 22 the operative information signal to have the DVD player to be operated in response to the pushing action of the operator 36 on the operation icon 25c "DVD". This means that the images produced by the DVD player can be reproduced on the display screen 24 by the projector unit 22 together with the sounds produced by the DVD player.

There is currently put on sales a control machine such as a remote control device which is constructed to have various buttons protruded from the surface of the remote control device to ensure that the machine such as DVD player is operated and controlled by pushing the buttons. In the image displaying apparatuses described in the above, the operation icons on the display screen 24 projected by the projector unit 22 are flushed with the surface of the display screen 24. If the operator slides his or her finger to the position of the operation icon to have the display screen transferring means 72 operated to transfer the display screen 24 forwardly, the operator can feel as if the operation icon on the display screen is pushed. This means that the display screen 24 is relatively moved by the display screen transferring means 72 with respect to the finger of the operator which is at a standstill. The relative motion of the display screen 24 with respect to finger causes the display screen to be pushed by the finger of the operator.

From the foregoing description, it will be appreciated that the transferring motion of the display screen 24 produced by the display screen transferring means 72 can allow the operator to feel as if the operation icon on the display screen 24 is pushed.

According to the present invention, the display screen transferring means may be replaced by a mechanism with an electric magnet or a linear motor and other means which can transfer the display screen forwardly or backwardly.

### (Fourth preferred embodiment)

The fourth embodiment of the image displaying apparatus will be described hereinafter.

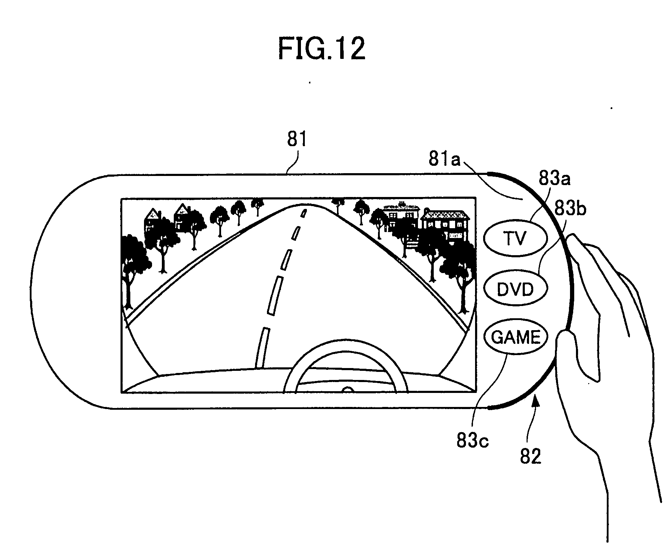

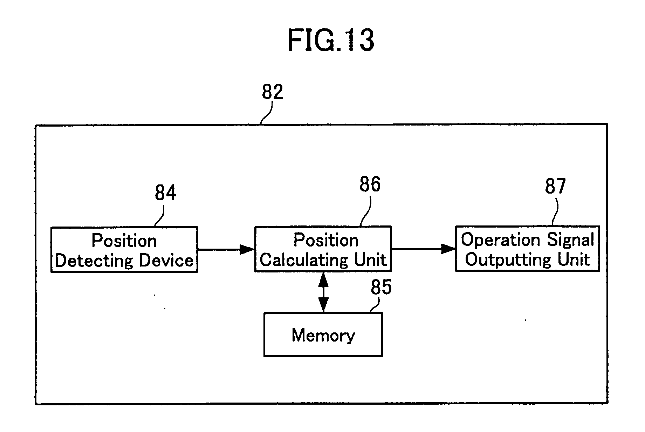

Referring now to FIGS. 12 and 13 of the drawings, there is shown a fourth preferred embodiment of the image displaying apparatus.

The constitutional elements and the steps of the fourth preferred embodiment of the image displaying apparatus according to the present invention as shown in FIGS. 12 and 13 are entirely the same as those of the first preferred embodiment of the image displaying apparatus according to the present invention as shown in FIGS. 1 to 7 except for the constitutional elements and the steps appearing in the following description. Therefore, only the constitutional elements and the steps of the fourth preferred embodiment of the image displaying apparatus different from those of the first preferred embodiment of the image displaying apparatus will be described in detail hereinafter. The constitutional elements and the steps of the fourth preferred embodiment of the image displaying apparatus entirely the same as those of the first preferred embodiment of the image displaying apparatus will not be described but bear the same reference numerals and legends as those of the first preferred embodiment of the image displaying apparatus in FIGS. 1 to 7 to avoid tedious repetition.

The following description will be directed to the constitutional elements and the steps of the fourth preferred embodiment of the image displaying apparatus different from those of the first preferred embodiment of the image displaying apparatus.

The image displaying apparatus is shown in FIG. 12 as comprising a display screen 81 having a rim portion 81a with at least one of left and right end faces bulged outwardly to form a sensor unit 82. The rim portion 81a has a pair of side end portions, viz., the left and right end faces which are each in the form of a curved shape. The sensor unit 82 is designed to detect the vertical position of the finger 35 of the operator 36 on the right face of the rim portion 81a to produce an operation signal to the projector unit 22. It is thus to be noted that the sensor unit 82 is adapted to detect the position on one of the left and right end faces to be in contact with the finger 35 of the operator 36.

On the right face of the rim portion 81a is provided a plurality of operation icons 83a, 83b and 83c exemplified by "TV", "DVD". and "GAME" projected by the projector unit 22.

The sensor unit 82 is provided with a position detecting device 84, a memory 85, a position calculating unit 86, and an operation signal outputting unit 87 as shown in FIG. 13.

The position detecting device 84 is constituted by a plurality of piezoelectric elements adapted to convert the pushing pressure received thereon to an electric signal. The memory 85 is designed to store the positions of the piezoelectric elements in correlation with the electric signals.

The position calculating unit 86 serves to calculate the positions touched by the finger 35 of the operator 36 based on the electric signals produced by the position detecting device 84 and the positions of the piezoelectric elements in correlation with the electric signals stored by the memory 85 and to produce respective pieces of positional information in correlation to the positions touched by the finger 35 of the operator 36. The operation signal outputting unit 87 is designed to output operation signals to projector unit 22 when receiving the respective pieces of the positional information produced by the position calculating unit 86. While the finger 35 of the operator 36 is being touched on the right face of the rim portion 81a, the position calculating unit 86 continues to calculate the positions touched by the finger 35 of the operator 36 to have the operation signal outputting unit 87 produce operation signals in correlation to the positions touched by the finger 35 of the operator 36. The continued calculation by the position calculating unit 86 and the continued operation signal producing operation by the operation signal outputting unit 87 make it possible for the operator to feel as if he or she rotates a handle of an automotive vehicle displayed on the display screen by the projector unit 22.

The operation of the fourth embodiment of the image displaying apparatus will hereinafter be described in detail.

The operation method of operating the display screen of the fourth preferred embodiment of the image displaying apparatus according to the present will be described hereinafter.

One of the operation icons 83a, 83b and 83c "TV", "DVD" and "GAME" is firstly pushed by the operator 36 to ensure that one of the "TV", "DVD" and "GAME" machines starts to be operated in a similar manner to the first to third embodiment of the image displaying apparatus. For example, the operator 36 pushes the position indicated by the operation icon 83c "GAME" on the display screen 81 to have the projector unit 22 reproduce the image outputted by the game machine.

The game machine starts with the image of a drive game as shown in FIG. 12. After the start of the game machine, the operator 36 touches on the position detecting device 84 of the sensor unit 82. At this time, the position calculating unit 86 is operated to receive the electric signal from the position detecting device 84 to calculate the positions touched by the finger 35 of the operator 36 to produce the respective pieces of positional information in correlation to the positions touched by the finger 35 of the operator 36. The operation signal outputting unit 87 is operated to receive the respective pieces of positional information produced by the position calculating unit 86 to output the operation signals to projector unit 22.

The projector unit 22 is then operated by the operation signals of the operation signal outputting unit 87 to project on the display screen 81 the image reproduced by the game machine, while the projector unit 22 is outputting to the game machine the operation signals received from the operation signal outputting unit 87. This means that the projector unit 22 can project the image changed and displayed on the display screen 81 in response to the operation signals by the operation signal outputting unit 87 when the game machine is operated by the operator 36.

The fact that the image displaying apparatus comprises a display screen 81 having a rim portion 81a with left and right end faces bulged outwardly to form a sensor unit 82 makes it possible for the operator to operate the game machine without any special remote control unit and operation buttons needed by the conventional image displaying apparatus to reproduce special movies, viz., without any handle unit outside the display screen 81 to drive the game machine.

The rim portion 81a of the display screen 81 has left and right end faces bulged outwardly to ensure that there is a space sufficiently wide to provide the operation icons 83a, 83b and 83c "TV", "DVD" and "GAME" without hindering the image displayed on the display screen.

While there has been described in the forgoing embodiment about the fact that the image displaying apparatus comprises a rim portion 81a with at least one left and right end faces, the image displaying apparatus may comprise a rim portion 81a with at least one left, right, upper and lower end faces.

In the fourth embodiment, the image displaying apparatus comprise a sensor unit formed on at least one of the left and right end faces of the rim portion for detecting the position on one of the left and right end faces to be in contact with the finger of an operator to produce an operation signal to the projector unit, however, the image displaying apparatus may comprise a sensor unit formed on at least one of the left, right, upper and lower end faces of the rim portion for detecting the position on one of the left, right, upper and lower end faces to be in contact with the finger of an operator to produce an operation signal to the projector unit.

### (Fifth preferred embodiment)

The fifth embodiment of the image displaying apparatus will be described hereinafter.

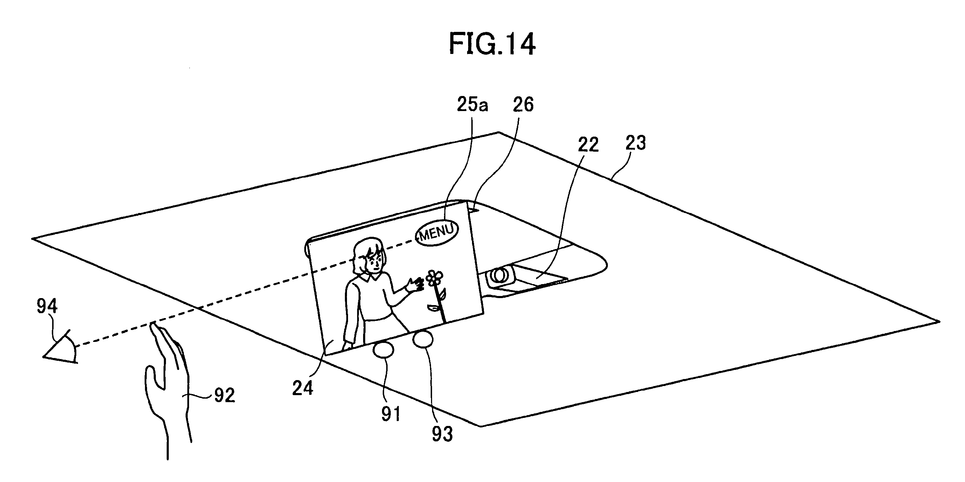

Referring now to FIGS. 14 to 16 of the drawings, there is shown a fifth preferred embodiment of the image displaying apparatus.

The constitutional elements and the steps of the fifth preferred embodiment of the image displaying apparatus according to the present invention as shown in FIGS. 14 to 16 are entirely the same as those of the first preferred embodiment of the image displaying apparatus according to the present invention as shown in FIGS. 1 to 7 except for the constitutional elements and the steps appearing in the following description. Therefore, only the constitutional elements and the steps of the fifth preferred embodiment of the image displaying apparatus different from those of the first preferred embodiment of the image displaying apparatus will be described in detail hereinafter. The constitutional elements and the steps of the fifth preferred embodiment of the image displaying apparatus entirely the same as those of the first preferred embodiment of the image displaying apparatus will not be described but bear the same reference numerals and legends as those of the first preferred embodiment of the image displaying apparatus in FIGS. 1 to 7 to avoid tedious repetition.

The following description will be directed to the constitutional elements and the steps of the fifth preferred embodiment of the image displaying apparatus different from those of the first preferred embodiment of the image displaying apparatus.

The image displaying apparatus is shown in FIG. 14 as comprising controlling means 91 including a finger position sensing unit 95 for detecting a specific finger position occupied by a finger, and controlling means 93 including an eye position sensing unit 101 for detecting a specific eye position on the line linking the specific finger position and the operation icon. The controlling means 91 and the controlling means 93 are securely mounted on the lower portion of the display screen.

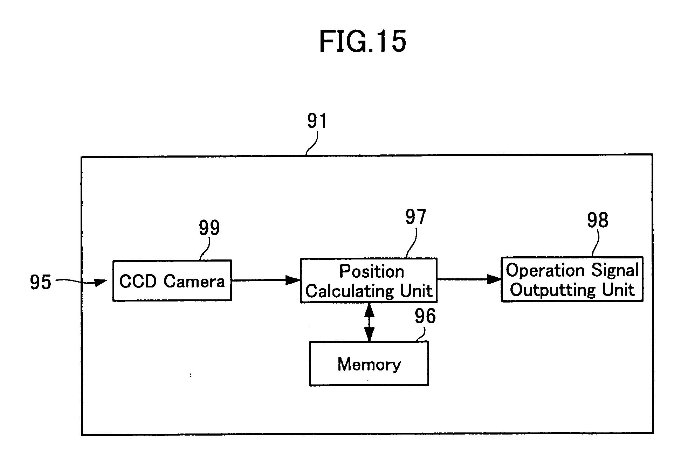

The controlling means 91 is shown in FIG. 15 as comprising a finger position sensing unit 95, i.e., comprising a CCD camera 99, a memory 96, a position calculating unit 97, and an operation signal outputting unit 98.

The finger position sensing unit 95 constituted by the CCD camera 99 is adapted to take an image of the finger 92 of the operator in the air in front of the CCD camera 99. The position calculating unit 97 is designed to calculate the position of the finger 92 of the operator based on the image taken by the CCD camera 99 and the position of the finger 92 in correlation with the position information stored in the memory 96 to output the positional information to the operation signal outputting unit 98. The operation signal outputting unit 98 is adapted to output an operation signal to the second sensor 93 when receiving the positional information from the position calculating unit 97.

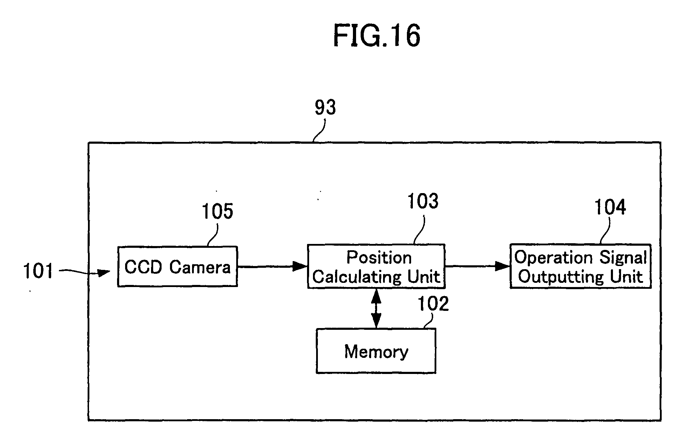

The controlling means 93 is shown in FIG. 16 as comprising a eye position sensing unit 101, i.e., a CCD camera 105, a memory 102, a position calculating unit 103, and an operation signal outputting unit 104.

The eye position sensing unit 101 constituted by the CCD camera105 is adapted to take an image of the eyes 94 of the operator. The position calculating unit 103 is designed to calculate the position of the eyes 94 of the operator based on the image taken by the CCD camera 105 and the position of the eyes 94 in correlation with the positional information stored in the memory 102 to output the positional information to the operation signal outputting unit 104. The operation signal outputting unit 104 is adapted to output an operation signal to the projector unit 22 when receiving the positional information from the position calculating unit 103.

From the foregoing description, it will be understood that the finger position sensing unit 95 for detecting a specific finger position occupied by a finger, and the eye position sensing unit 101 for detecting a specific eye position on the line linking the specific finger position and the operation icon ensures that the operation icon is regarded as being pushed, i.e., selected to have the controlling means 91 and 93 control the projector unit 22.

The operation of the fifth embodiment of the image displaying apparatus will hereinafter be described in detail.

The operation of the fifth preferred embodiment of the image displaying apparatus according to the present invention are entirely the same as that of the first preferred embodiment of the image displaying apparatus according to the present invention except for the operation appearing in the following description. Therefore, only the operation of the fifth preferred embodiment of the image displaying apparatus different from that of the first preferred embodiment of the image displaying apparatus will be described in detail hereinafter.

When the finger 92 of the operator is in the air in front of the finger position sensing unit 95, i.e., CCD camera 99, the CCD camera is operated to take an image of the ringer 92 of the operator. The position calculating unit 97 is then operated to calculate the position of the finger 92 of the operator based on the image taken by the CCD camera 99 of the finger position sensing unit 95 and the position of the finger 92 in correlation with the positional information stored in the memory 96 to output the positional information to the operation signal outputting unit 98. The operation signal outputting unit 98 is then operated to output the operation signal to the controlling means 93 when receiving the positional information from the position calculating unit 97.

Concurrently with the CCD camera 99 of the finger position sensing unit 95 operated to take an image of the finger 92 of the operator, the CCD camera 105 of the eye position sensing unit 101 is operated to take an image of the eyes 94 of the operator. The position calculating unit 103 is operated to calculate the position of the eyes 94 of the operator based on the image taken by the CCD camera of the eye position sensing unit 101 and the position of the eyes 94 in correlation with the positional information stored in the memory 102 to output the positional information to the operation signal outputting unit 104.

The operation signal outputting unit 104 is then operated to judge whether the eye position and the finger position are on the same line on the operation icon "MENU" displayed on the display screen or not. If the operation signal outputting unit judges that the eye position and the finger position are on the same line on the operation icon "MENU" displayed on the display screen, the operation signal outputting unit 104 is operated to output to the projector unit 22 the operation signal to have the projector unit 22 operated to change the current image into the following image "TV", "DVD" and "GAME". If, on the other hand, the operation signal outputting unit 104 judges that the eye position and the finger position are not on the same line on the operation icon "MENU" displayed on the display screen, the operation signal outputting unit 104 is not operated to output to the projector unit 22 the operation signal to have the projector operated to change the current image into the following image "TV", "DVD" and "GAME".

The fact that the operation signal outputting unit 104 can judge that the eye position and the finger position are on the same line on the operation icon "MENU" displayed on the display screen to have the projector unit 22 operated to change the current image into the following image "TV", "DVD" and "GAME" makes it possible to operate the projector unit 22 without pushing the operation icon on the display screen 24. This enables the operateability of the projector unit 22 to be enhanced.

According to the present invention, each of the CCD cameras of the controlling means 91 and 93 may be replaced by an optical sensor, an infrared sensor, and a magnet sensor for detecting the eye position 94 and the finger position 92.

While the controlling means 91 and the controlling means 93 have been described as being securely mounted on the lower portion of the display screen, the controlling means 91 and the controlling means 93 may be placed on the position where the finger position sensing unit 95 and the eye position sensing unit 101 can detect the eye position and the finger position on the same line on the operation icon displayed on the display screen.

In the first to fifth embodiments of the image displaying apparatus according to the present invention, the projector unit 22 may be constituted by a liquid crystal type of projector. In place of the liquid crystal type of projector, the projector unit 22 may be constituted by three-tube type of projector, i.e., cathode ray tube of projector, and a digital light processing projector according to the present invention. The projector unit 22 constituted by a liquid crystal type of projector can be used in combination with the display screen 24 which may be constituted by a light penetrating crystal liquid type of screen panel or by a light reflection crystal liquid type of screen panel. In short, the projector unit 22 is essential to enlarge the image on the display screen 24.

## Claims

1. An image displaying apparatus (21), comprising:
a projector unit (22) mounted on an automotive vehicle (23) to project an image;
a display screen (24, 81) mounted on said automotive vehicle (23) to display said image projected from said projector unit (22);
an operation icon (25a to 25g) projected on one assigned area of said display screen (24, 81) by said projector unit (22);
controlling means (26, 46, 91, 93) for controlling said projector unit (22) by producing an operation signal in correlation with said operation icon to said projector unit (22) when said operation icon (25a to 25g) is selected.

2. An image displaying apparatus (21) as set forth in claim 1, in which said controlling means (26, 46, 91, 93) includes sensing unit (27, 62) for sensing on said display screen (24, 81) a light produced when said operation icon (25a to 25g) is selected to have said controlling means (26, 46, 91, 93) produce said operation signal in correlation with said operation icon (25a to 25g).

3. An image displaying apparatus (21) as set forth in claim 1, in which said display screen (24, 81) is made of a flexible and transparent resin material.

4. An image displaying apparatus as set forth in claim 2, in which said sensing unit (27, 62) includes an optical sensor.

5. An image displaying apparatus (21) as set forth in claim 2, in which said sensing unit (27, 62) is constituted by a touch panel.

6. An image displaying apparatus as set forth in claim 1, which further comprises an additional controlling means (61) disposed in overlapping relationship with said controlling means (26, 46) to control said projector unit (22) by producing an additional operation signal when said operation icon (25a to 25g) is pushed deeply after being pushed shallowly.

7. An image displaying apparatus (21) as set forth in claim 1, which further comprises display screen transferring means (72) for transferring said display screen (24) forwardly and backwardly of said automotive vehicle.

8. An image displaying apparatus (21) as set forth in claim 1, in which said display screen (81) comprises a rim portion (81a) with at least one left, right, upper and lower end faces, and which further comprises a sensor unit (82) formed on at least one of said left, right, upper and lower end faces of the rim portion (8 1 a) for detecting the position on one of the left, right, upper and lower end faces to be in contact with the finger (32) of an operator (36) to produce an operation signal to said projector unit (22).

9. An image displaying apparatus (21) as set forth in claim 8, in which said rim portion (81a) of said display screen (81) has a pair of left and right side end portions each in the form of a curved shape.

10. An image displaying apparatus (21) as set forth in claim 1, which further comprises a finger position sensing unit (95) for detecting a specific finger position occupied by a finger (92), and an eye sensing unit (101) for detecting a specific eye position on the line linking said specific finger position and said operation icon (25a to 25g) to ensure that said operation icon (25a to 25g) is regarded as being selected to have said controlling means (91, 93) control said projector unit (22).
